Europäisches Patentamt

European Patent Office

Office européen des brevets

(19)

(11) Publication number: **0 079 764**
**B1**

# (12) EUROPEAN PATENT SPECIFICATION

(45) Date of publication of patent specification: **28.08.85**

(51) Int. Cl.⁴: **C 09 D 11/06**

(21) Application number: **82306007.4**

(22) Date of filing: **11.11.82**

(54) **Printing inks.**

(30) Priority: **13.11.81 GB 8134336**
**17.08.82 GB 8223637**

(43) Date of publication of application:
**25.05.83 Bulletin 83/21**

(45) Publication of the grant of the patent:
**28.08.85 Bulletin 85/35**

(84) Designated Contracting States:
**AT BE CH DE FR GB IT LI LU NL SE**

(56) References cited:
**GB-A-1 454 899**
**US-A-3 615 750**
**US-A-3 925 273**

(73) Proprietor: **Chemoxy International Limited
All Saints Refinery Cargo Fleet Road
Middlesborough Cleveland (GB)**

(72) Inventor: **Best, Robert David Marshall
51 Wheatlands Park
Redcar Cleveland (GB)**

(74) Representative: **Lamb, John Baxter et al
Marks & Clerk 57/60 Lincoln's Inn Fields
London WC2A 3LS (GB)**

Courier Press, Leamington Spa, England.

# Description

This invention is concerned with improvements in and relating to printing inks.

Typical "news" inks comprise a finely divided pigment, dispersed in an oily vehicle containing a binder resin. The principal component of the vehicle is an oil base, typically an aromatic naphthenic or paraffinic oil base, which may, for example, form about 90% by weight of the ink vehicle. The use of such inks leads to disadvantages in practice, for example misting — that is the formation of very small droplets of ink and oil vapour which settle on the press and which may fall on the paper being printed in addition to causing possible environmental hazards in the print shop. A further disadvantage of conventional new inks is the poor smear or smudge resistance of the printed matter.

It has been proposed, in British Patent Specification No. 1,454,899, to produce inks for printing sublimable dyestuffs onto suitable substrates, comprising a water-in-oil emulsion of a water insoluble liquid containing a binder, the aqueous or oil phase containing a sublimable disperse dyestuff.

It has now been found, in accordance with the present invention, that a printing ink vehicle may be prepared by emulsifying a base oil with a significant quantity of water using certain emulsifying agents, as defined more particularly hereinafter, and that inks prepared from such vehicles are, in use, markedly less prone to misting and the generation of vapour than are the conventional inks discussed above.

According to the invention, therefore, there is provided a printing ink vehicle comprising an emulsion of a mineral oil and water and containing, as emulsifying agent, an amine or alkali metal salt of an oxidized acid wax.

The invention also provides an ink comprising a vehicle as defined above and containing one or more colouring agents.

The oil component of the ink vehicle of the invention suitably comprises a light mineral oil, for example having a viscosity, at 25°C of from 0.1 to 1.4 Pa.s (1 to 14 poise), preferably from 0.1 to 0.7 Pa.s (1 to 7 poise), especially about 0.2 Pa.s (two poise).

The emulsifying agent used in the ink vehicle is an amine or alkali metal soap of an oxidized paraffinic wax. Oxidized paraffinic waxes are well-known materials. They are commonly prepared by the air oxidation of a wax containing predominantly paraffinic components by blowing air through a melt of the wax, for example at a temperature of from 100 to 200°C, in the presence of an oxidation catalyst. The starting paraffinic wax may be a so-called "microcrystalline" wax (in which case it is believed that the long chain paraffins are largely in the iso-form); a crystalline wax (in which it is believed that the long chain paraffins are largely straight chain paraffins); or a paraffinic scale or slack wax which are mixtures of crystalline and/or microcrystalline waxes in oil.

The products (oxidate acids) themselves are complex mixtures containing unreacted starting material and oxidized products such as acids, lactones and esters. The degree of oxidation of an oxidized paraffinic wax is commonly indicated by its acid number (the number of milligrams of potassium hydroxide required to neutralize a one gram sample of the oxidate) and for use in the present invention, the oxidized wax suitably has an acid number of from 40 to 60, preferably from 40 to 50, most preferably from 45 to 50. One preferred class of oxidized waxes for use in accordance with the invention are oxidized waxes derived from a crystalline scale or slack wax, and preferably having an acid number of from 40 to 50, a saponification value of from 100 to 130, a viscosity, measured at 99°C (210°F), of from $1.6 \times 10^{-5}$ to $4 \times 10^{-5}$ m$^2$/s (16 to 40 centistokes), preferably $2 \times 10^{-5}$ to $3 \times 10^{-5}$ m$^2$/s, and a cone penetration of less than 50 at 25°C, preferably less than 30 at 25°C.

Another preferred class of oxidized waxes for use in accordance with the invention are liquid oxidate acid mixtures derived from predominantly paraffinic oils and preferably having an acid number of from 40 to 50, a saponification value of from 100 to 120, and a viscosity (measured at 99°C) of $2.5 \times 10^{-6}$ to $10 \times 10^{-6}$, preferably $3 \times 10^{-6}$ to $8 \times 10^{-6}$ n$^2$/s, and a pour point below 0°C. Such oxidized materials themselves already contain paraffinic oils and thus an ink vehicle in accordance with the invention can be prepared therefrom by saponifying the oxidized oil and then emulsifying the saponified material with water.

In the present invention, the oxidized paraffin wax is employed as an amine or alkali metal soap thereof, suitably a hydroxyalkyl amine soap, e.g. a tri(hydroxyethyl) amine soap or a sodium soap. The soap is prepared by reaction of the oxidate with an appropriate saponifying agent such as an amine or alkali metal hydroxide or carbonate. The saponification may be carried out by direct reaction of the saponifying agent with the molten oxidate (for example at a temperature of from 70 to 150°C) or by reaction of the oxidate with a solution of the saponifying agent.

The ink vehicle of the invention is conveniently prepared by firstly blending the oil base with the oxidate soap and then emulsifying the resultant blend with water. Both operations are suitably carried out at moderately elevated temperatures, for example from 75 to 95°C, preferably from 85 to 95°C. The weight ratio of oxidate soap to mineral oil base employed to produce the first blend is suitably such that the soap forms from 15 to 50% by weight, preferably from 25 to 40% by weight of the total mixture of soap and mineral oil base. Conveniently the blending operation is carried out by first placing the soap in a suitable blending vessel, heating it to the required temperature, for example about 90°C, and then stirring in the mineral oil and blending the resultant mixture, for example for a period of from 30 minutes to 1 hour. The resultant blend is then emulsified with water and this emulsification is conveniently carried out by adding warm water to the heated blend of soap and mineral oil and stirring at elevated temperature, e.g. about 90°C, for, for example, from 30 to 60 minutes. The whole emulsion is then allowed to cool, preferably with stirring. The weight ratio of mineral oil/soap blend to water employed is suitably such that the resultant emulsion, the ink vehicle of the invention, contains at least 10% by weight of water, preferably at least 20% by weight of water. When employing the preferred soaps, as indicated above, it is possible to introduce water in amounts of up to 50% by weight of the total ink vehicle.

The resultant ink vehicle may then be converted to a printing ink by mixing it with an appropriate colouring agent e.g. a pigment, such as carbon black in which case a fluffy grade carbon black is desirably employed. Alternatively a predispersed pigment may be employed.

The mixing of the ink vehicle with the pigment will be generally carried out using conventional apparatus for the introduction of pigments into ink vehicles, for example high speed shear mixers, pebble mills or triple roll mills.

Alternatively the ink may be prepared by firstly mixing the oxidate soap/mineral oil blend with the colouring agent (which may be a pigment such as carbon black desirably a fluffy grade carbon black or a granulated or predispersed pigment) and then blending the mixture with water. After dispersion or dissolution of the colouring agent in the oxidate soap/oil blend, the water, in an amount of up to 50% by weight of the total ink vehicle, may be blended with the mixture at a temperature between ambient and 90°C and preferably between 60 and 70°C.

In addition to the oxidized wax soaps the ink vehicles and inks of the invention may also contain a minor proportion (relative to the oxidized wax soap) of other soaps obtained by the saponification of saponifiable materials of natural or synthetic origin. Examples of such other saponifiable materials include materials of vegetable origin such as plant waxes (e.g. carnauba or candelilla wax), plant oils, plant fats, plant gums and plant resins (e.g. conifer resins including colophony); materials of animal origin such as animal waxes (e.g. beeswax), animal oils (e.g. bone oil) and animal fats (e.g. tallow); and materials of mineral or synthetic origin such as mineral waxes (e.g. montan wax), refined petroleum waxes (e.g. ozokerite), tall fatty acids and oxidized alpha-olefins. Such other soaps are suitably present in an amount of less than 25% by weight, preferably less than 10% by weight, based on the weight of oxidized wax soap.

As noted above, inks based on the ink vehicles of the invention have a marked advantage over conventional inks in that, in use, they give rise to much reduced misting and vapour generation as compared with the conventional inks. As a result the working atmosphere in a print shop may be markedly cleaner. Another important advantage of the printing ink vehicles of the invention, as compared with conventional printing ink vehicles, is that due to the incorporation of relatively high amounts of water they are generally lower in basic raw material and production costs.

Further, inks produced based on the ink vehicles of the invention, have been found to give faster drying rates than conventional letterpress inks, to be equally suited to newsprint of high or low porosity, and to give a marked improvement in suppression of paper dust. Another important advantage of the ink vehicles of the invention is that in contrast to conventional inks containing aromatic oil bases they have a much reduced tendency to swell the rubber rollers of printing machines.

In contrast to conventional inks containing hydrogenated base oils the ink vehicles of the invention provide a much faster rate of wetting of the pigment, consequently the dispersion time and resultant savings in utility use give further reductions in the cost of manufacture. Also as compared with conventional inks containing aromatic or unrefined or partly refined naphthenic or paraffinic base oils, the ink vehicles of the invention can provide a much stronger colour response when coloured pigments are employed and such coloured pigments will not discolour as quickly when exposed to natural or artificial light. Consequently the amount of pigment necessary to achieve a given colour response is much lower.

Inks produced in accordance with the invention have as compared with conventional inks, stronger fixation and bonding properties to a substrate upon which they are printed. Consequently there is a substantial improvement in the resistance to smearing or smudging of the printed matter when handled. This is a most desirable property since it avoids the nuisance, to the reader of the printed matter, e.g. a newspaper, of ink transfer to the skin.

In order that the invention may be well understood, the following examples are given by way of illustration only.

### Example 1
(a) *Preparation of Amine Soap*

An oxidized acid wax having an acid number between 40 and 50 mg KOH/gm (Hypax 450 LS manufactured by the applicants) was heated to a temperature of 80°C. 13.5% by weight of triethanolamine (based on the weight of the acid oxidate) was added to the heated material and the whole mass stirred for 30 minutes or until most of the acids were converted to their amine soap.

(b) *Preparation of Soap/Oil Blend*

The amine soap was heated to a temperature of between 70—90°C. Mineral oil (0.2 Pa.s) was blended with the heated soap to give a blend containing 67% weight of oil and 33% weight of amine soap. The blend was then allowed to cool with constant stirring.

### (c) *Preparation of Ink*

100 Parts by weight of the soap/oil blend were introduced into a suitable mixer capable of dispersing carbon black pigment. The mixer was started. Then 20 parts by weight of fluffy furnace grade carbon black, having a nitrogen surface area between 46—220 square metres/gram, were introduced into the mix. When the carbon was fully dispersed with the soap/oil blend as indicated by its consistency and flow property, 60 parts by weight of water were introduced into the mass at a temperature of 65°C with continued mixing until the ink had a consistent flow and appearance.

The resultant ink vehicle was suitable for use in rotary letter press machines operating at speeds between 40,000—50,000 copies per hour.

### Example 2

### (a) *Preparation of Sodium Soap*

An oxidized acid wax having an acid number between 40 and 50 mg/KOH/gm, a drop melting point of 55°C and a viscosity of $1.6$—$2.4 \times 10^{-5}$ m$^2$/s at 99°C (Hypax 450 LS manufactured by the applicants) was heated to a temperature of 80°C. 4.5% by weight of sodium hydroxide (based on the weight of the acid oxidate) was added to the heated material and the whole mass stirred for 30 minutes or until most of the acids were converted to their sodium soaps.

### (b) *Preparation of Soap/Oil Blend*

The sodium soap produced in (a) above was heated to a temperature of between 70—90°C. Naphthenic mineral oil (0.15 Pa.s) was blended with the heated soap to give a blend containing 80% by weight of oil and 20% by weight of amine soap. The blend was then allowed to cool with constant stirring.

### (c) *Preparation of Ink*

100 parts by weight of the soap/oil blend were introduced into a suitable mixer capable of dispersing carbon black pigment. The mixer was started. Then 20 parts by weight of fluffy furnace grade carbon black, having an iodine number of 28 mg/g and a DBP absorption of 66 m$^3$/100 g, and 2 parts by weight of a bituminous additive (Gilsonc Selects) were introduced into the mix. When the carbon was fully dispersed with the soap/oil blend as indicated by its consistency and flow property, 49 parts by weight of water were introduced into the mass at a temperature of 65°C with continued mixing until the ink had a consistent flow and appearance.

The resultant ink had a viscosity of 0.9—1.3 Pa.s at 25°C and flow rates of approximately 170 mm after one minute and 290 mm after 5 minutes.

The resultant ink could be used with paper of both high and low porosity and was suitable for use on hard and soft polymer printing plates — in which latter case it was found to be self-cleaning thus avoiding build up of paper fibre or dust in half tones. The basic varnish (soap/oil/water emulsion) can also be used for the operation of coloured inks for use on high speed rotary letterpresses.

### Example 3

### (a) *Preparation of Soap*

Following the procedure of Example 2 (a) a soap was prepared from a liquid oxidized hydrocarbon wax containing predominantly paraffinic hydrocarbons having an acid number of 45—50, a viscosity at 99°C of $4$—$6 \times 10^{-6}$ m$^2$/s and a pour point of $-10$°C (Hypax 150 sold by the applicants).

### (b) *Preparation of Soap/Pigment Blend*

80 parts by weight of the liquid soap obtained in (a) above was milled on a triple roll mill with 20 parts by weight of a low structure carbon black, to give a black varnish.

### (c) *Preparation of Ink*

100 Parts by weight of the black varnish prepared in (b) above and 60 parts by weight of water were blended together following the procedure described in Example 2 (c) but using a temperature of 60°C, to produce an ink.

The resultant ink was suitable for use as a flexographic ink and it was noted that such an ink is readily cleaned from a flexographic plate, after use, with warm water.

### Example 4

### (a) *Preparation of Soap Solution*

An oxidized acid was having an acid number of 45—50, a drop melting point of 55°C and a viscosity of $1.6$—$2.4 \times 10^{-5}$ m$^2$/s at 99°C (Hypax 450L manufactured by the applicants) was reacted with 2.8% by weight of sodium hydroxide (based on the weight of the oxidized wax) and water was then added to the resultant composition over a period of 30 minutes using a high speed turbo mixer to give a dispersion containing 40% by weight of sodium soap solids.

### (b) *Preparation of Soap/Oil/Water Emulsion*

30 Parts by weight of a 0.15 Pa.s hydrocarbon oil were added to 100 parts by weight of the emulsion produced in (a) above and blended therewith following the general procedure described in Example 2 (c) to give an ink vehicle in accordance with the invention.

This vehicle could be blended with water soluble pigments and gloss improvers suitable for corrugated and other absorbent substrates. For example an ink prepared by blending 15% by weight of a water soluble pigment the varnish described above could be employed to provide a fast-drying flexographic ink having good resistance to humidity.

### Claims

1. A printing ink vehicle characterized in that it comprises an emulsion of a mineral oil and water containing, as emulsifying agent, an amine or alkali metal salt of an oxidized paraffinic wax.

2. A printing ink vehicle as claimed in claim 1 characterized in that the mineral oil is a light mineral oil having a viscosity, at 25°C, of from 0.1 to 1.4 Pa.s.

3. A printing ink vehicle as claimed in claim 1 or claim 2 characterized in that the oxidized wax has an acid number of from 40 to 60.

4. A printing ink vehicle as claimed in any one of the preceding claims characterized in that the oxidized wax is one derived from a crystalline scale or slack wax.

5. A printing ink vehicle as claimed in any one of claims 1—3 characterized in that the oxidized wax is a liquid oxidate mixture derived from paraffinic oils.

6. A printing ink vehicle as claimed in any one of the preceding claims characterized in that the soap forms from 15 to 50% by weight of the total weight of the soaps and mineral oil base.

7. A printing ink vehicle as claimed in any one of the preceding claims characterized in that it contains at least 10% by weight of water.

8. An ink vehicle as claimed in claim 7 characterized in that it contains from 20 to 50% by weight of water.

9. An ink characterized in that it comprises an ink vehicle as claimed in any one of the preceding claims and also contains a colouring agent.

10. An ink as claimed in claim 9 characterized in that the colouring agent is a pigment.

**Revendications**

1. Véhicule pour encre d'impression, caractérisé en ce qu'il consiste en une émulsion d'une huile minérale et d'eau contenant, comme agent émulsifiant, un sel d'amine ou de métal alcalin d'une cire paraffinique oxydée.

2. Véhicule pour encre d'impression selon la revendication 1, caractérisé en ce que l'huile minérale est une huile minérale légère ayant une viscosité à 25°C de 0,1 à 1,4 Pa.s.

3. Véhicule pour encre d'impression selon la revendication 1 ou la revendication 2, caractérisé en ce que la cire oxydée a un indice d'acide de 40 à 60.

4. Véhicule pour encre d'impression selon l'une quelconque des revendications précédentes, caractérisé en ce que la cire oxydée est une cire dérivée d'une paraffine écaille ou non déshuilée cristalline.

5. Véhicule pour encre d'impression selon l'une quelconque des revendications 1 à 3, caractérisé en ce que la cire oxydée est un mélange oxydé liquide dérivé d'huiles paraffiniques.

6. Véhicule pour encre d'impression selon l'une quelconque des revendications précédentes, caractérisé en ce que le savon constitue de 15 à 50%, en poids, du poids total des savons et de la base d'huile minérale.

7. Véhicule pour encre d'impression selon l'une quelconque des revendications précédentes, caractérisé en ce qu'il contient au moins 10%, en poids, d'eau.

8. Véhicule pour encre selon la revendication 7, caractérisé en ce qu'il contient de 20 à 50%, en poids, d'eau.

9. Encre caractérisée en ce qu'elle contient un véhicule pour encre selon l'une quelconque des revendications précédentes et contient également un agent colorant.

10. Encre selon la revendication 9, caractérisée en ce que l'agent colorant est un pigment.

**Patentansprüche**

1. Verdünnungsmittel einer Drucktinte, dadurch gekennzeichnet, daß es aus einer Emulsion eines Mineralöls und Wasser, das als emulgierendes Agens ein Amin- oder Alkalimetallsalz eines oxidierten Paraffinwachses enthält, besteht.

2. Verdünnungsmittel nach Anspruch 1, dadurch gekennzeichnet, daß das Mineralöl ein Leichtmineralöl mit einer Viskosität von 0,1—1,4 Pa.S bei 25°C ist.

3. Verdünnungsmittel nach Anspruch 1 oder 2, dadurch gekennzeichnet, daß das oxidierte Wachs eine Säurezahl von 40—60 hat.

4. Verdünnungsmittel nach Anspruch 1, 2 oder 3, dadurch gekennzeichnet, daß das oxidierte Wachs von einem kristallinen Niederschlag- oder Gruswachs abgeleitet ist.

5. Verdünnungsmittel nach einem der Ansprüche 1—3, dadurch gekennzeichnet, daß oxidierte Wachs eine flüssige oxidierte Mischung ist, die von einem Paraffinöl abgeleitet ist.

6. Verdünnungsmittel nach einem der vorhergehenden Ansprüche, dadurch gekennzeichnet, daß die Seife von 15—50 Gew. % des Gesamtgewichtes von Seifen und Mineralölgrundbestandteil ist.

7. Verdünnungsmittel nach einem der vorhergehenden Ansprüche, dadurch gekennzeichnet, daß es mindestens 10 Gew. % Wasser enthält.

8. Verdünnungsmittel nach Anspruch 7, dadurch gekennzeichnet, daß es von 20—50 Gew. % Wasser enthält.

9. Tinte, dadurch gekennzeichnet, daß sie ein Verdünnungsmittel gemäß einem der vorhergehenden Ansprüche enthält und auch ein färbendes Agens enthält.

10. Tinte nach Anspruch 9, dadurch gekennzeichnet, daß das färbende Agens ein Pigment ist.